# EUROPEAN PATENT APPLICATION

(11) **EP 0 713 961 A1**
(43) Date of publication of application: **29.05.1996**
(21) Application number: 95115875.7
(22) Date of filing: 09.10.1995
(51) Int. Cl.: F02C 9/38

(54) **Fuel control with metered flow bypass**

(30) Priority: 22.11.1994 US 343302
(71) Applicant: AlliedSignal Inc., Morristown, New Jersey 07962-2245 (US)
(72) Inventor: Tran, Donald T., Morristown, NJ 07962 (US)
(74) Representative: Poidatz, Emmanuel

(57) **Abstract**

A fuel control system is described that includes in flow series a pump (16) receiving a flow of low pressure fuel and a metering valve (24) controlled by a torque motor (23). Downstream of the metering valve is a pressurizing valve (32) in parallel relationship to an orifice (34). Both the pressurizing valve (32) and orifice (34) fluidly communicate with the metering valve (24) and the flow of low pressure fuel into the pump. When the control system is required to deliver a fuel flow that is below the minimum fuel capability of the metering valve (24), the excess flow from the valve is bypassed through the orifice (34) to the pump (16) inlet.

## Description

### TECHNICAL FIELD

This invention relates to fuel control systems for gas turbine engines, and in particular, to fuel control systems having metering devices for controlling the fuel flow to the engine.

### BACKGROUND OF THE INVENTION

Auxiliary Power Units (APU) are small gas turbine engines mounted aboard many types of aircraft to supply pressurized air for environmental control systems and main engine starting as well as shaft horsepower to drive accessories such as electric generators or hydraulic pumps. Traditionally APUs were only operated while the aircraft was on the ground. However, with the advent of Extended Twin Engine Operation (ETOPS), the operating envelop for APUs has been extended to altitudes of 45,000 feet where the ambient temperature is -69.7^{o}F.

To enable the APU to operate both at sea level and at altitude depends of its fuel control system being able to accurately meter fuel flow over a wide range of flow rates. For example, at sea level the APU may require a fuel flow of 400 lb/hr while at 45,000 feet it may only require 10 lb/hr. The ratio of maximum metered fuel flow delivered by the fuel control system to minimum metered fuel flow is referred to as the turn down ratio. In this example the turn down ratio is 40 to 1, (i.e. 400/10).

Currently, the best commercially available metering valves are only capable of turn down ratios of about 16 to 1. In addition, the valve must be sized for the maximum fuel flow required. Thus, a valve sized to handle a maximum 400 lb/hr flow would have a minimum flow capability of 25 lb/hr, (i.e. 400/16) which is above the minimum fuel flow required by the APU. Below its minimum capability, the valve's reliability rapidly deteriorates as viscosity and leakage effects come into play.

Accordingly, there is a need for a fuel control system using metering valves that can deliver fuel flows below the minimum capability of the valve.

### SUMMARY OF THE INVENTION

An object of the present invention is to provide a fuel control system having a metering valve, wherein the turn down ratio of the system is greater than the turn down ratio of the valve.

Another object of the present invention is to provide a method for operating a fuel control system having a metering valve, in which the system can deliver fuel flows below the minimum capability of the metering valve.

The present invention achieves the above-stated objectives by providing a fuel control system that includes in flow series a pump receiving a flow of low pressure fuel and a metering valve controlled by a torque motor. Downstream of the metering valve is a pressurizing valve in parallel relationship to an orifice. Both the pressurizing valve and orifice fluidly communicate with the metering valve and the flow of low pressure fuel into the pump. When the control system is required to deliver a fuel flow that is below the minimum fuel capability of the metering valve, the excess flow from the valve is bypassed through the orifice to the pump inlet.

These and other objects, features and advantages of the present invention, are specifically set forth in, or will become apparent from, the following detailed description of a preferred embodiment of the invention then read in conjunction with the accompanying drawings.

### BRIEF DESCRIPTION OF THE DRAWINGS

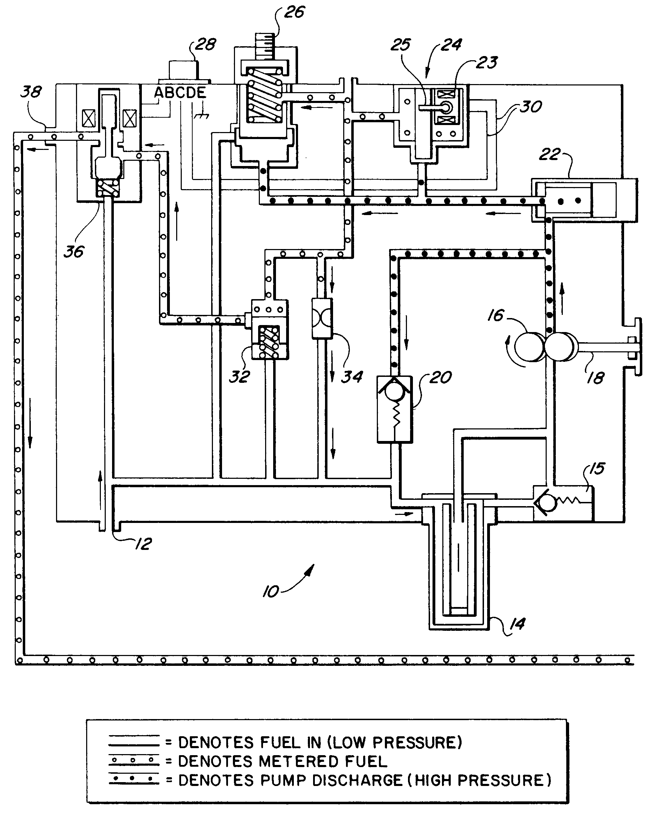

The sole figure is a schematic of a fuel control system contemplated by the present invention.

### DESCRIPTION OF THE PREFERRED EMBODIMENT

Referring to the drawing, low pressure fuel from a supply tank, (not shown), enters a fuel control system 10 through an inlet port 12. From the port 12 the fuel flows through a replaceable inlet filter 14 with a protective internal screen. The filter 14 is made of a non-wicking fiberglass to prevent icing during flight. An impending bypass valve and indicator 15 provides advance warning should the filter 14 become clogged. From the filter 14 the fuel flows to a fuel pump 16. The pump 16 is conventional in construction and is driven by a shaft 18 which is coupled to a gas turbine engine. Should the pressure of the fuel exiting the pump 16 exceed a preset level, a relief valve 20 opens. From the pump 16, high pressure fuel flows through a high pressure filter 22 and then to a conventional torque motor metering valve 24 and a differential pressure regulator 26.

The torque motor metering valve 24 includes a conventional electrically operated torque motor 23 which has a known and repeatable relationship with an input current signal. The input current is generated by the engine's electronic control box and is transmitted to the torque motor 23 through junction 28 and wires 30. The torque motor 23 is directly coupled to a metering valve 25 and controls the valve's position so that a known flow area in the valve corresponds with a known current into the torque motor. The pressure regulator 26 maintains a constant pressure drop across the metering valve 25 by bypassing excess flow back to the low pressure fuel flow upstream of the pump 16. As a result the metered flow from the valve 25 is a direct function of the current into the torque motor 23.

The metered fuel flow from the metering valve 25 flows to a pressurizing valve 32 which is in parallel with a bypass orifice 34. Both the valve 32 and orifice 34 are also in fluid communication with the low pressure fuel flow upstream of the pump 16. The valve 32 maintains the metered flow at a minimum pressure that is always higher than the pressure of the fuel flow entering the pump 16. This allows the orifice 34 to bypass a known amount of metered fuel back to the low pressure fuel flow upstream of the pump 16, thus reducing the amount of metered flow by a preset amount. The orifice 34 can be either a variable area orifice, a fixed area orifice, a constant flow orifice, a valve, or some other flow regulating device. From the pressurizing valve 32 the metered fuel flow, less the amount bypassed, flows through a fuel shutoff valve 36, an exit port 38 and then to the gas turbine engine. The valve 36 is a conventional three-way solenoid valve.

The pressurizing valve 32 and orifice 34 are dimensioned, in a manner familiar to those skilled in the art, so that metered flow is only bypassed when the fuel control system 10 is required to deliver a fuel flow less than the minimum capability fuel flow of the metering valve 25. The actual dimensions of the valve 32 and orifice 34 are dependent on the particular metering valve employed and the minimum fuel flow requirements of the particular engine.

Referring back to the example discussed in the background section of the application, when the APU is at 45,000 feet and only needs 10 lb/hr of fuel, the metering valve with a 16 to 1 turn down ratio flows 25 lb/hr. The orifice 34 bypasses 15 lb/hr of fuel so that only 10 lb/hr of fuel flow is delivered to the engine. By bypassing this amount the turn down ratio of the fuel system 10 is 40 to 1 while the turn down ratio of the valve is 16 to 1.

Though the preferred embodiment has described the subject invention with reference to an APU, the invention is equally applicable to other types of gas turbine engines and to any application requiring metered flow. Accordingly, various modifications and alterations to the above described embodiments will be apparent to those skilled in the art and therefore this description of the invention should be considered exemplary in nature and not as limiting to the scope and spirit of the invention as set forth in the following claims.

## Claims

1. A fuel control system comprising:
a pump receiving a flow of low pressure fuel;
a metering valve receiving pressurized fuel from the pump;
a conduit having a flow regulating device in fluid communication with an outlet of the metering valve and the low pressure fuel flow; and
a pressurizing valve in parallel relationship to the flow regulating device and in fluid communication with the metering valve outlet, the low pressure fuel flow, and a discharge port of the fuel control system.

2. The fuel control system of claim 1 wherein the flow regulating device is an orifice.

3. The fuel control system of claim 1 wherein the flow regulating device is a valve.

4. The fuel control system of claim 1 wherein the pressurizing valve and the flow regulating device are configured so that metered flow is only bypassed when the flow through the discharge port is less than the minimum fuel flow capability of the metering valve.

5. A method for operating a fuel control system having a metering valve so that the fuel control system delivers a fuel flow below the minimum fuel flow capability of the metering valve, comprising the steps of:
supplying a flow of low pressure fuel that is approximately the same as the minimum fuel flow capability of the metering valve;
pressurizing the fuel;
metering the pressurized fuel with the metering valve;
providing a conduit with a flow regulating device between the outlet of metering valve and the low pressure fuel flow;
bypassing a portion of the metered flow through the conduit by regulating the pressure drop across the flow regulating device; and
delivering the remaining portion of the metered flow to a discharge port of the fuel control system.

6. A fuel control system comprising:
means for pressurizing a flow of low pressure fuel;
means for metering the pressurized fuel;
means for delivering the metered fuel to a discharge port of the fuel control system; and
means for flowing a portion of the metered fuel flow from the delivering means to the low pressure fuel flow, the flowing means only operable when the metered flow required at the discharge port is less than the minimum flow capability of the metering means.

7. The fuel control system of claim 6 wherein the flowing means includes a pressurizing valve in parallel relationship with a flow regulating device.
